# EUROPÄISCHE PATENTSCHRIFT

(11) **EP 2 774 237 B1**
(45) Veröffentlichungstag und Bekanntmachung des Hinweises auf die Patenterteilung: **20.01.2016**
(21) Anmeldenummer: 12780745.1
(22) Anmeldetag: 02.11.2012
(51) Int. Cl.: H02H 7/18, H02H 3/087

(54) **BATTERIESYSTEM**
BATTERY SYSTEM
SYSTÈME DE BATTERIE

(30) Priorität: 03.11.2011 AT 16222011
(43) Veröffentlichungstag der Anmeldung: 10.09.2014
(73) Patentinhaber: AVL List GmbH, 8020 Graz (AT)
(72) Erfinder: NIEDERL, Dietmar, A-8091 Jagerberg (AT)
(74) Vertreter: Babeluk, Michael
(86) Internationale Anmeldenummer: PCT/EP2012/071706
(87) Internationale Veröffentlichungsnummer: WO 2013/064623

(56) Entgegenhaltungen:
- DE-A1-102009 053 712
- US-A- 6 008 627

## Beschreibung

Die Erfindung betrifft ein Batteriesystem mit einer Batterie, insbesondere mit Lithium-Ionen-Zellen, mit einer Überstromabschalteinrichtung, wobei zumindest eine Sicherung und zumindest ein Schaltrelais elektrisch in Serie geschaltet sind, sowie mit zumindest einem Stromsensor zur Erfassung des Batteriestromes, wobei das Schaltrelais einen ersten Abschaltstrombereich mit einem maximal schaltbaren Strom und die Sicherung einen zweiten Abschaltstrombereich mit einem minimal schaltbaren Strom aufweist, wobei der maximal schaltbare Strom des ersten Strombereiches und der minimal schaltbare Strom des zweiten Strombereiches über einem maximalen Strom eines Betriebsstrombereiches liegen und wobei die schaltbaren Ströme des zweiten Abschaltstrombereiches zumindest überwiegend größer sind als die schaltbaren Ströme des ersten Abschaltstrombereiches.

Es ist bekannt, eine Überstromabschaltung nur durch Öffnen eines Hauptrelais durchzuführen. Weiters ist oft eine Sicherung im Hochspannungspfad installiert, welche redundanten Schutz gegen Überstrom und im Kurzschlussfall bieten soll.

Ein derartiges Batteriesystem ist beispielsweise aus der JP 2008-193 776 A1 bekannt. Das Batteriesystem weist Batterieblöcke auf, welche über eine Sicherung in Serie verbunden sind. Zusätzlich weist das Batteriesystem Relais auf, die mit der Ausgabeseite der Batterie verbunden sind. Bei diesem Batteriesystem brennt die Sicherung durch und schaltet den Strom in der Batterie ab, wenn übermäßiger Strom in die antreibende Batterie fließt. Darüber hinaus schaltet eine Steuerschaltung, die die Relais steuert, die Relais zum Abschalten des Stromes aus. Die Steuerschaltung des Batteriesystem ist mit einer Stromerfassungsschaltung zum Erfassen von Strom der Batterie versehen, wobei das Laden und Entladen der Batterie auf der Grundlage des erfassten Stroms gesteuert wird. Die Stromerfassungsschaltung erfasst Strom innerhalb des normalen Batterie-Lade- und Entlade-Bereiches, beispielsweise bei oder unter 200 A bei einem Batteriesystem eines Fahrzeuges. Fließt in der Batterie ein größerer Strom als dieser, insbesondere, wenn abnormal hoher Strom in der Batterie fließt, werden die Relais auf "AUS" geschaltet, um den Batteriestrom zu unterbrechen.

In einem Fehlerfall im System, sei es durch einen Kurzschluss oder einen Fehler in der Leistungselektronik außerhalb der Batterie, oder durch Komponentendefekte, können Ströme oberhalb des normal erlaubten bzw. spezifizierten Strombereichs auftreten. Sicherungen für den Einsatz in solchen Batteriepaketen haben nachteilige Eigenschaften, die den Einsatzbereich für die Abschaltung des Überstromes einschränken. Sicherungen müssen den Betriebsstrombereich tragen können, ohne zu altern und ohne frühzeitig zu lösen. Um dies gewährleisten zu können, muss der Schmelzleiter entsprechend konzipiert sein. Dadurch ergibt sich eine untere Abschaltstromgrenze (minimal schaltbarer Strom) für Sicherungen. Unterhalb dieser unteren Abschaltgrenze kann die Sicherung nicht zur Auslösung gebracht werden. Ströme knapp unterhalb dieses unteren Schwellwertes können eine übermäßige Erwärmung und ein Schmelzen von umgebenden Teilen bis hin zur Brandbildung verursachen.

Andererseits haben Relais, die für Batteriesysteme der Eingans genannten Art zur Verfügung stehen, nachteilige Eigenschaften in der Abschaltfähigkeit des Stromes. Durch die Abschaltung des hohen Stromes können die Kontakte so sehr beschädigt werden, dass bei einem Wiederzuschalten der Übergangswiderstand so schlecht ist, dass es zu einem Überhitzen des Relais bei weiterem Betrieb und damit auch zu einer deutlichen Leistungseinschränkung des gesamten System kommen kann. Weiters wird bei einer Abschaltung im Hochstrombereich aufgrund des starken Lichtbogens das Kontaktmaterial in der Kontaktkammer verteilt, was den Isolationswiderstand von einem Kontaktpol des Relais zum anderen unter die erlaubte Grenze bringt. Damit entsteht Gefahr, dass Spannung außerhalb der Batterie abgreifbar wird, obwohl das Schaltrelais geöffnet ist.

Weiters ist aus der DE 10 2009 053 712 A1 ein Batteriesystem mit einer mit der Batterie verbundenen Sicherung bekannt, die bei Fließen von übermäßigem Strom durchbrennt. Mit der Ausgabeseite der Batterie ist weiters ein Relais verbunden. Über eine Stromunterbrechungsschaltung kann übermäßiger Batteriestrom erfasst und das Relais kontrolliert werden. Die Stromunterbrechungsschaltung ist dabei mit einer Timer-Sektion versehen, die eine Verzögerungszeit für das Ausschalten des Relais bestimmt. Für die Verzögerungszeit der Timer-Sektion wird der Schmelzstrom der Sicherung niedriger festgelegt, als der maximale Unterbrechungsstrom der Relais und höher als der maximal erlaube Batterie-, Lade- und Entladestrom. In einer Situation, in der übermäßiger Strom, größer als der maximale Unterbrechungsstrom der Relais, durch die Batterie fließt, brennt die Sicherung während der Timer-Verzögerungszeit durch, und die Stromunterbrechungsschaltung schaltet die Relais von "AN" auf "AUS", wenn die Verzögerungszeit abgelaufen ist. Während der Verzögerungszeit brennt die Sicherung durch, um Strom bei einem Strom zu unterbrechen, der groß genug ist, um die Relaiskontakte zu schmelzen. Ein übermäßiger Strom, der die Sicherung während der Verzögerungszeit nicht durchbrennen lässt, wäre demnach ein Strom, der die Relaiskontakte nicht schmelzen lässt, weshalb die Relais nach der Verzögerungszeit ausgeschaltet werden können.

Nachteilig ist, dass die Höhe des übermäßigen Stromes nicht erfasst wird und dass erst nach Ablauf der Verzögerungszeit das Relais ausgeschalten wird. Obwohl die Verzögerungszeit nur 0,3 Sekunden beträgt, kann es bei Stromstärken, welche größer sind, als die maximale Betriebsstromstärke, aber nur knapp geringer als die Auslösungsstromstärke für die Schmelzsicherung, zu übermäßiger Erwärmung von umgebenden Teilen führen, wodurch lokale thermische Überlastungen nicht ausgeschlossen werden können.

Aufgabe der Erfindung ist es, auf möglichst einfache Weise ein Batteriesystem bereit zu stellen, das den Batteriestrom zuverlässig unterbrechen bzw. abschalten kann, ohne dass es zu thermischen Überlastungen von Bauteilen kommt.

Erfindungsgemäß wird dies gemäß den Ansprüchen 1 und 4 dadurch erreicht, dass der erste und der zweite Abschaltstrombereich einen Überlappungsbereich aufweisen, und dass zumindest ein Stromsensor ausgebildet ist, um Ströme bis zum minimal schaltbaren Strom des zweiten Abschaltstrombereiches, vorzugsweise bis zum maximal schaltbaren Strom des ersten Abschaltstrombereiches, zu erfassen.

Vorzugsweise ist vorgesehen, dass ein zweiter Stromsensor ausgebildet ist, um Ströme nur innerhalb des Betriebsstrombereiches zu erfassen.

Der Betriebsstrombereich ist jener Strombereich, bei welchem betriebsmäßige normale Lade- und Entladevorgänge ohne zeitliche Beschränkung stattfinden können, ohne dass Bauteile thermisch überlastet werden. Im Überstrombereich treten dagegen Ströme auf, welche größer sind als die Lade- und Entladeströme des Betriebsstrombereiches. Der Überstrombereich erstreckt sich somit vom maximal erlaubten Strom des Überstrombereiches bis hin zum Kurzschlussstrom. Überströme führen, insbesondere wenn sie über längere Zeit anhalten, zu thermischer Überbeanspruchung von Bauteilen.

Der Überlappungsbereich kann dabei zumindest 5%, vorzugsweise zumindest 10% des ersten Abschaltstrombereiches betragen.

Zum Unterschied zur DE 10 2009 053 712 A1 muss eine Verzögerungszeit nicht abgewartet werden, um ein Ausschalten des Schaltrelais durchzuführen. Das Ausschalten des Schaltrelais erfolgt somit unverzüglich, sobald durch die Batteriesteuereinheit festgestellt wird, dass der durch den Stromsensor gemessene Strom innerhalb des ersten Abschaltstrombereiches, aber über dem maximalen Betriebsstrombereich liegt.

Vorzugsweise wird bei Strömen unterhalb des minimal schaltbaren Stromes des zweiten Abschaltstrombereiches, vorzugsweise oberhalb des maximalen Betriebsstrombereiches, der Batteriestrom durch Öffnen des Schaltrelais unterbrochen. Weiters kann vorgesehen sein, dass bei Batterieströmen oberhalb des ersten Abschaltstrombereiches oder oberhalb des minimal schaltbaren Stromes des zweiten Abschaltstrombereiches ein Öffnen des Schaltrelais verhindert wird. Andererseits wird bei Strömen unterhalb des zweiten Abschaltstrombereiches ein Unterbrechen des Batteriestromes durch die Sicherung verhindert.

Da zumindest einer der Stromsensoren die Fähigkeit hat, zumindest bis zum Beginn des Überlappungsbereiches zu messen, kann direkt bestimmt werden, ob das Schaltrelais betätigt werden kann oder nicht. Aufgrund der Strommessung wird dann entschieden, ob das Schaltrelais geschlossen bleibt (wenn der Messstrom höher als der Schaltstrom des Relais ist), oder ob es geöffnet werden kann (da der gemessene Strom kleiner als der maximal schaltbare Strom des Relais ist) und den Stromkreis unterbricht.

Ist der Strom andauernd zu hoch, unterbricht die Sicherung den Stromkreis. Dadurch kann in weiterer Folge von der Strommessung erkannt werden, dass der Strom kleiner als der maximal schaltbare Strom des Relais ist und somit das Schaltrelais wiederum geöffnet werden.

Die Erfindung wird im Folgenden anhand der Fig. näher erläutert. Es zeigen:
- Fig. 1: schematisch ein erfindungsgemäßes Batteriesystem; und
- Fig. 2: Betriebsbereiche für die Überstromabschalteinrichtung des erfindungsgemäßen Batteriesystems.

Das Batteriesystem 1 weist eine aufladbare Batterie 2, beispielsweise einen Lithium-Ionen-Akkumulator, und eine Überströmabschalteinrichtung 3 mit einem Schaltrelais 4, einen ersten Stromsensor 5a, einen zweiten Stromsensor 5b, und eine als Schmelzsicherung ausgebildete Sicherung 6 auf. Die Batterie 2, das Schaltrelais 4 und die Stromsensoren 5a, 5b stehen mit einer Batteriesteuereinheit BCU in Verbindung. Das Schaltrelais 4 weist einen ersten Abschaltstrombereich I3 auf, innerhalb dessen das Schaltrelais 4 gefahrlos zumindest einmal geschaltet werden kann, sodass der Isolationswiderstand des Schaltrelais 4 in einem ausreichend hohen Bereich ist.

Die beiden Stromsensoren 5a, 5b weisen unterschiedliche Messbereiche auf. Der erste Stromsensor 5a weist einen weiteren Messbereich I₂ auf, welcher im Wesentlichen den ersten Abschaltstrombereich I₃ des Schaltrelais 4 abdeckt. Die Messgenauigkeit dieses Stromsensors 5a muss nicht allzu groß sein.

Der zweite Stromsensor 5b ist für den Betriebsstrombereich I₁ bis zum maximal zulässigen Spitzenstrom I_{P} ausgelegt. Die Sicherung 6 weist einen zweiten Abschaltstrombereich I₄ auf. Der zweite Abschaltstrombereich I₄ liegt überwiegend bei höheren Strömen I als der erste Abschaltstrombereich I₃, wobei erster Abschaltstrombereich I₃ und zweiter Abschaltstrombereich I₄ einen Überlappungsbereich ΔI aufweisen. Mit I_{C} ist ein kontinuierlicher Betriebsstrom bezeichnet, bei dem ein zeitlich nicht eingeschränkter Betrieb ohne thermische Überbeanspruchung von Bauteilen möglich ist.

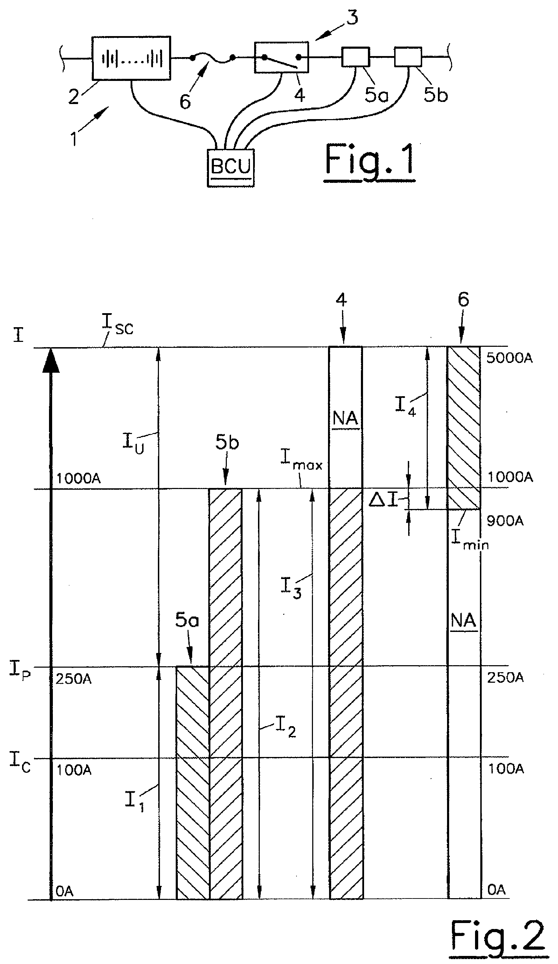

Mit I_{U} ist der Überstrombereich bezeichnet, welcher sich oberhalb des Betriebsbereiches I₁ bis zum Kurzschlussstrom I_{SC} erstreckt. Mit NA sind in Fig. 2 für das Schaltrelais 4 und die Sicherung 6 nicht schaltbare Strombereiche bezeichnet.

Der erste Stromsensor 5a hat die Fähigkeit, bis zum Überlappungsbereich ΔI zu messen. Aufgrund der Messung des ersten Stromsensors 5a wird entschieden, ob das Schaltrelais 4 geschlossen bleibt, oder ob es geöffnet wird. Das Schaltrelais 4 bleibt dabei immer dann geschlossen, wenn der Strom I über dem Messbereich des ersten Stromsensors 5a liegt, da in diesem Falle der Strom I zu hoch für das schaltbare Relais 4 ist. Wenn der Strom I im Überstrombereich I_{U} liegt, aber unterhalb des maximal schaltbaren Stromes Iₘₐₓ des Schaltrelais 4 ist, so kann das Schaltrelais 4 zur Unterbrechung des Stromes I eingesetzt und geöffnet werden.

Ist der Strom I hingegen andauernd höher als der maximal durch das Schaltrelais 4 schaltbare Strom Iₘₐₓ, so unterbricht die Sicherung 6 durch Schmelzen den Stromkreis. In Weiterer Folge kann zur zusätzlichen Sicherheit auch das Schaltrelais 4 geöffnet werden, wenn durch einen der Stromsensoren 5a, 5b, erkannt wird, dass der Strom unterhalb des maximal schaltbaren Stromes Iₘₐₓ des Schaltrelais 4 liegt.

Das Schaltrelais 4 und die Sicherung 6 müssen in ihrer Eigenschaft der Abschaltfähigkeit so ausgelegt werden, dass sie einen gewissen Überlappungsbereich ΔI aufweisen. Bei den in Fig. 2 dargestellten Beispiel hat das Schaltrelais 4 eine Abschaltfähigkeit im ersten Abschaltstrombereich I₃ zwischen 0 A bis 1000A und die Sicherung einen zweiten Abschaltstrombereich I₄ von etwa 900A bis zum Kurzschlussstrom I_{SC}. Der erste Stromsensor 5a muss dabei den Strom I bis etwa 1000A messen können, wobei eine grobe Auflösung ausreichend ist.

In einer Überstromsituation wird der Strom I bis 1000A durch den ersten Stromsensor 5a gemessen. Sollte der Stromanstieg unterhalb von 1000A bleiben, so wird das Schaltrelais 4 abgeschaltet und damit der Stromkreis unterbrochen. Steigt der Strom I aber über den Messbereich I₂ des zweiten Stromsensors 5b an oder liegt oberhalb des minimal schaltbaren Stromes Iₘᵢₙ der Sicherung 6, so wird das Schaltrelais 4 geschlossen gehalten, bis die Sicherung 6 den Stromkreis trennt.

Damit wird gewährleistet, dass alle möglichen Stromstufen von 0A bis zum Kurzschlussstrom I_{SC} sicher von den Komponenten getrennt werden, ohne dass eine Beschädigung des Systems auftritt.

## Patentansprüche

1. Batteriesystem (1) mit einer Batterie (2), insbesondere mit Lithium-Ionen-Zellen, mit einer Überstromabschalteinrichtung(3), wobei zumindest eine Sicherung (6) und zumindest ein Schaltrelais (4) elektrisch in Serie geschaltet sind, sowie mit zumindest einem Stromsensor (5a; 5b) zur Erfassung des Batteriestromes (I), wobei das Schaltrelais (4) einen ersten Abschaltstrombereich (I₃) mit einem maximal schaltbaren Strom (Iₘₐₓ) und die Sicherung (6) einen zweiten Abschaltstrombereich (I₄) mit einem minimal schaltbaren Strom (Iₘᵢₙ) aufweist, wobei der maximal schaltbare Strom (Iₘₐₓ) des ersten Abschaltstrombereiches (I₃) und der minimal schaltbare Strom (Iₘᵢₙ) des zweiten Abschaltstrombereiches (I₄) über einem maximalen Strom (I_{P}) eines Betriebsstrombereiches (I₁) liegen und wobei die schaltbaren Ströme (I) des zweiten Abschaltstrombereiches (I₄) zumindest überwiegend größer sind als die schaltbaren Ströme (I) des ersten Abschaltstrombereiches (I₃), wobei der erste und der zweite Abschaltstrombereich (I₃, I₄) einen Überlappungsbereich (ΔI) aufweisen, und dass zumindest ein erster Stromsensor (5a) ausgebildet ist, um Ströme (I) zumindest bis zum minimal schaltbaren Strom (Iₘᵢₙ) des zweiten Abschaltstrombereiches (I₄), vorzugsweise bis zum maximal schaltbaren Strom (Iₘₐₓ) des ersten Abschaltstrombereiches (I₃), zu erfassen **dadurch gekennzeichnet, dass** der erste Stromsensor (5a) ausgebildet ist, um den Strom bis zum Überlappungsbereich (ΔI) zu messen, und dass das Schaltrelais (4) in Abhängigkeit des gemessenen Stromes (I) geschlossen bleibt oder geöffnet wird, wobei das Schaltrelais (4) geöffnet wird, wenn der Strom (I) in einem Überstrombereich (I_{U}) aber unterhalb des maximal schaltbaren Stroms (Iₘₐₓ) liegt, und wobei das Schaltrelais (4) geschlossen bleibt wenn der Strom (I) oberhalb des Messbereichs des ersten Stromsensors (5a) liegt.

2. Batteriesystem (1) nach Anspruch 1, **dadurch gekennzeichnet, dass** ein zweiter Stromsensor (5b) ausgebildet ist, um Ströme (I) nur innerhalb des Betriebsstrombereiches (I₁) zu erfassen.

3. Batteriesystem (1) nach Anspruch 1 oder 2, **dadurch gekennzeichnet, dass** der Überlappungsstrombereich (ΔI) zumindest 5% des ersten Abschaltstrombereiches (I₃), vorzugsweise zumindest 10% des ersten Abschaltstrombereiches (I₃), beträgt.

4. Verfahren zur Abschaltung von Batterien (2) bei Überströmen bei einem Batteriesystem (1) mit einer Batterie (2), insbesondere mit Lithium-Ionen-Zellen, mit einer Überstromabschalteinrichtung(3), wobei zumindest eine Sicherung (6) und zumindest ein Schaltrelais (4) elektrisch in Serie geschaltet sind, sowie mit zumindest einem Stromsensor (5a; 5b) zur Erfassung des Batteriestromes (I), wobei das Schaltrelais (4) einen ersten Abschaltstrombereich (I₃) mit einem maximal schaltbaren Strom (Iₘₐₓ) und die Sicherung (6) einen zweiten Abschaltstrombereich (I₄) mit einem minimal schaltbaren Strom (Iₘᵢₙ) aufweist, wobei der maximal schaltbare Strom (Iₘₐₓ) des ersten Abschaltstrombereiches (I₃) und der minimal schaltbare Strom (Iₘᵢₙ) des zweiten Abschaltstrombereiches (I₄) über einem maximalen Strom (Iₚ) eines Betriebsstrombereiches (I₁) liegen und wobei die schaltbaren Ströme (I) des zweiten Abschaltstrombereiches (I₄) zumindest überwiegend größer sind als die schaltbaren Ströme (I) des ersten Abschaltstrombereiches (I₃), wobei mit zumindest einem Stromsensor (5a, 5b) der Batteriestrom (I) gemessen wird und bei Strömen (I) innerhalb des ersten Abschaltstrombereiches (I₃) und über dem maximalen Betriebsstrombereich (I1) der Batteriestrom (I) durch Öffnen des Schaltrelais (4) unterbrochen wird, **dadurch gekennzeichnet, dass** mit einem ersten Stromsensor (5a) Ströme (I) innerhalb des Abschaltstrombereiches (I₃) gemessen werden, und dass das Schaltrelais (4) in Abhängigkeit des gemessenen Stromes (I) geschlossen bleibt oder geöffnet wird, wobei bei Strömen (I) unterhalb des minimal schaltbaren Stromes (Iₘᵢₙ) des zweiten Strombereiches (I₄) der Batteriestrom (I) durch Öffnen des Schaltrelais (4) unterbrochen wird, und wobei bei Strömen (I) oberhalb des ersten Abschaltstrombereiches (I₃) oder oberhalb des minimal schaltbaren Stromes (Iₘᵢₙ) des zweiten Abschaltstrombereiches (I₄) ein Öffnen des Schaltrelais (4) verhindert wird.

5. Verfahren nach Anspruch 4, **dadurch gekennzeichnet, dass** bei Strömen (I) unterhalb des zweiten Abschaltstrombereiches (I₄) ein Unterbrechen des Batteriestromes durch die Sicherung (6) verhindert wird.

## Claims

1. A battery system (1), comprising a battery (2), especially one having lithium-ion cells, an overcurrent switch-off device (3), wherein at least one fuse (6) and at least one switching relay (4) are electrically connected in series, and comprising at least one current sensor (5a; 5b) for detecting the battery current (I), wherein the switching relay (4) has a first switch-off current range (I₃) with a maximum switchable current (Iₘₐₓ), and the fuse (6) has a second switch-off current range (I₄) with a minimum switchable current (Iₘᵢₙ), wherein the maximum switchable current (Iₘₐₓ) of the first switch-off current range (I₃) and the minimum switchable current (Iₘᵢₙ) of the second switch-off current range (I₄) lie above a maximum current (Iₚ) of an operating current range (I₁), and wherein the switchable currents (I) of the second switch-off current range (I₄) are at least predominantly greater than the switchable currents (I) of the first switch-off current range (I₃), wherein the first and the second switch-off current range (I₃, I₄) have an overlapping range (ΔI), and at least one first current sensor (5a) is configured in such a fashion to detect currents (I) at least up to the minimum switchable current (Iₘᵢₙ) of the second switch-off current range (I₄), preferably up to the maximum switchable current (Iₘₐₓ) of the first switch-off current range (I₃), **characterised in that** the first current sensor (5a) is formed to measure the current up to the overlapping range (ΔI), and the switching relay (4) remains closed or is opened depending on the measured current (I), wherein the switching relay (4) is opened when the current (I) lies in an overcurrent range (Iᵤ) but beneath the maximum switchable current (Iₘₐₓ), and wherein the switching relay (4) remains closed when the current (I) lies above the measuring range of the first current sensor (5a).

2. A battery system (1) according to claim 1, **characterised in that** a second current sensor (5b) is arranged in order to detect currents (I) only within the operating current range (I₁).

3. A battery system (1) according to claim 1 or 2, **characterised in that** the overlapping current range (ΔI) is at least 5% of the first switch-off current range (I₃), preferably at least 10% of the first switch-off current range (I₃).

4. A method for switching off batteries (2) in the case of overcurrents in a battery system (1), comprising a battery (2), especially one having lithium-ion cells, an overcurrent switch-off device (3), wherein at least one fuse (6) and at least one switching relay (4) are electrically connected in series, and comprising at least one current sensor (5a; 5b) for detecting the battery current (I), wherein the switching relay (4) has a first switch-off current range (I₃) with a maximum switchable current (Iₘₐₓ), and the fuse (6) has a second switch-off current range (I₄) with a minimum switchable current (Iₘᵢₙ), wherein the maximum switchable current (Iₘₐₓ) of the first switch-off current range (I₃) and the minimum switchable current (Iₘᵢₙ) of the second switch-off current range (I₄) lie above a maximum current (Iₚ) of an operating current range (I₁), and wherein the switchable currents (I) of the second switch-off current range (I₄) are at least predominantly greater than the switchable currents (I) of the first switch-off current range (I₃), wherein the battery current (I) is measured by at least one current sensor (5a, 5b) and the battery current (I) is interrupted by opening the switching relay (4) at currents (I) within the first switch-off current range (I₃) and above the maximum operating current range (I₁), **characterised in that** currents (I) within the switch-off current range (I₃) are measured with the first current sensor (5a), and the switching relay (4) remains closed or is opened depending on the measured current (I), wherein the battery current (I) is interrupted by opening the switching relay (4) in case of currents (I) beneath the minimum switchable current (Iₘᵢₙ) of the second current range (I₄), and wherein an opening of the switching relay (4) is prevented at currents (I) above the first switch-off current range (I₃) or above the minimum switchable current (Iₘᵢₙ) of the second switch-off current range (I₄).

5. A method according to claim 4, **characterised in that** an interruption of the battery current by the fuse (6) is prevented at currents (I) beneath the second switch-off current range (I₄).

## Revendications

1. Système de batterie (1) comprenant une batterie (2) en particulier à cellules lithium ion, comprenant un dispositif de coupure en cas de surintensité de courant (3), au moins un fusible (6) et au moins un relais de commutation (4) étant branchés électriquement en série, ainsi qu'au moins un détecteur de courant (5a, 5b) pour permettre de déterminer le courant de batterie (I), le relais de commutation (4) comprenant une première zone de courant de coupure (I₃) avec un courant commutable maximum (Iₘₐₓ), et le fusible (6) comprenant une seconde zone de courant de coupure (I₄) avec un courant commutable minimum (Iₘᵢₙ), le courant commutable maximum (Iₘₐₓ) de la première zone de courant de coupure (I₃) et le courant commutable minimum (Iₘᵢₙ) de la seconde zone de courant de coupure (I₄) étant supérieure à un courant maximum (Iₚ) d'une zone de courant de fonctionnement (I₁), et les courants commutables (I) de la seconde zone de courant de coupure (I₄) étant au moins la plupart du temps supérieurs aux courants commutables (I) de la première zone de courant de coupure (I₃), la première et la seconde zone de courant de coupure (I₃, I₄) comprenant une zone de chevauchement (ΔI) et au moins un premier détecteur de courant (5a) étant réalisé pour détecter des courants (I) au moins jusqu'au courant commutable minimum (Iₘᵢₙ) de la seconde zone de courant de coupure (I₄), de préférence jusqu'au courant commutable maximum (Iₘₐₓ) de la première zone de courant de coupure (I₃),
**caractérisé en ce que**
le premier détecteur de courant (5a) est réalisé pour mesurer le courant jusqu'à la zone de chevauchement (ΔI) et le relais de commutation (4) reste fermé ou s'ouvre en fonction du courant mesuré (I), le relais de commutation (4) s'ouvrant lorsque le courant (I) est situé dans une zone de surintensité de courant (I_{U}) mais au-dessous du courant commutable maximum (Iₘₐₓ) et le relais de commutation (4) restant fermés lorsque le courant (I) est situé au-dessus de la zone de mesure du premier détecteur de courant (5a).

2. Système de batterie (1) conforme à la revendication 1,
**caractérisé en ce qu'**
un second détecteur de courant (5b) est réalisé pour ne détecter que des courants (I) situés dans la zone de courant de fonctionnement (I₁).

3. Système de batterie (1) conforme à la revendication 1 ou 2,
**caractérisé en ce que**
la zone de courant de chevauchement (ΔI) est égale à au moins 5% de la première zone de courant de coupure (I₃), de préférence à au moins 10% de la première zone de courant de coupure (I₃).

4. Procédé de coupure de batteries (2) en présence de surintensités de courant dans un système de batterie (1) comprenant une batterie (2) en particulier à cellules lithium-ion, comprenant un dispositif de coupure en cas de surintensité de courant (3), au moins un fusible (6) et au moins un relais de commutation (4) étant branchés électriquement en série, ainsi qu'au moins un détecteur de courant (5a, 5b) pour permettre de déterminer le courant de batterie (I), le relais de commutation (4) comprenant une première zone de courant de coupure (I₃) avec un courant commutable maximum (Iₘₐₓ) et le fusible (6) comprenant une seconde zone de courant de coupure (I₄) avec un courant commutable minimum (Iₘᵢₙ), le courant commutable maximum (Iₘₐₓ) de la première zone de courant de coupure (I₃) et le courant commutable minimum (Iₘᵢₙ) de la seconde zone de courant de coupure (I₄) étant supérieure à un courant maximum (Iₚ) d'une zone de courant de fonctionnement (I₁), et les courants commutables (I) de la seconde zone de courant de coupure (I₄) étant au moins la plupart du temps supérieurs aux courants commutables (I) de la première zone de courant de coupure (I₃), le courant de batterie (I) étant mesuré avec au moins un détecteur de courant (5a, 5b), et, en présence de courants (I) situés dans la première zone de courant de coupure (I₃) et supérieurs à la zone de courant de fonctionnement maximum (I₁), le courant de batterie (I) étant interrompu par ouverture du relais de commutation (4),
**caractérisé en ce qu'**
avec un premier détecteur de courant (5a) on mesure des courants (I) situés dans la zone de courant de coupure (I₃), et le relais de commutation (4) reste fermé ou s'ouvre en fonction du courant (I) mesuré, en présence de courants (I) situés au-dessous du courant commutable minimum (Iₘᵢₙ) de la première zone de courant de coupure (I₄), le courant de batterie (I) étant interrompu par ouverture du relais de commutation (4), et, en présence de courants (I) situés au-dessus de la première zone de courant de coupure (I₃) ou au-dessus du courant commutable minimum (Iₘᵢₙ), de la seconde zone de courant de coupure (I₄) une ouverture du relai de commutation (4) étant empêchée.

5. Procédé conforme à la revendication 4,
**caractérisé en ce qu'**
en présence de courants (I) inférieur à la seconde zone de courant de coupure (I₄) une interruption du courant de batterie est empêchée par le fusible (6).
